# EUROPEAN PATENT APPLICATION

(11) **EP 4 535 891 A1**
(43) Date of publication of application: **09.04.2025**
(21) Application number: 22943243.0
(22) Date of filing: 27.05.2022
(51) Int. Cl.: H04W 72/04, H04W 72/12, H04L 5/00

(54) **TERMINAL CAPABILITY REPORTING METHOD AND APPARATUS, DEVICE AND MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2022/095767
(87) International publication number: WO 2023/226045

(57) **Abstract**

The present application discloses a terminal capability reporting method and apparatus, a device and a medium, and belongs to the technical field of communications. The method comprises: reporting to an access network device that a terminal supports a plurality of sets of transmission configuration indication (TCI) states. According to the method, the diversification of terminals can conveniently be implemented, and a base station can conveniently configure M-TRP transmission of the TCI state for the terminals by using different manners.

## Description

### TECHNICAL FIELD

The present disclosure relates to a field of communication technology, and more particularly to a method and an apparatus for reporting a terminal capability, a device and a medium.

### BACKGROUND

In the field of communication technology, in order to reduce a signaling overhead, a unified transmission configuration indicator (TCI) state is introduced. For example, when a base station indicates a unified TCI state for downlink, the TCI state can be applied to a physical downlink shared channel (PDSCH), at least a part of a physical downlink control channel (PDCCH) and some downlink reference signals of a terminal. When the base station indicates a unified TCI state for uplink, the TCI state can be applied to a physical uplink shared channel (PUSCH), at least a part of a physical uplink control channel (PUCCH) and some uplink reference signals of the terminal.

The related art only supports a scenario that the terminal reports a single transmission reception point (S-TRP), that is, the content that the terminal reports to an access network device is that only the S-TRP is configured on an uplink channel and a downlink channel of the terminal. However, the related art is only applicable to the S-TRP.

### SUMMARY

The embodiments of the present disclosure provide a method and an apparatus for reporting a terminal capability, a terminal and a medium. The terminal supports diversified channel transmission modes, so that an access network device can configure a terminal with a multi transmission reception point (M-TRP) based on a transmission configuration indication (TCI) state. The technical solution is as follows.

According to an aspect of embodiments of the present disclosure, a method for reporting a terminal capability is provided. The method is executed by a terminal, and includes: reporting that the terminal supports a plurality of sets of TCI states to an access network device.

According to another aspect of embodiments of the present disclosure, an apparatus for reporting a terminal capability is provided, and includes: a reporting module configured to report that a terminal supports a plurality of sets of TCI states to an access network device.

According to another aspect of embodiments of the present disclosure, a method for reporting a terminal capability is provided. The method is executed by an access network device, and includes: receiving information that a terminal supports a plurality of sets of TCI states reported by the terminal.

According to another aspect of embodiments of the present disclosure, an apparatus for reporting a terminal capability is provided, and includes: a receiving module configured to receive information that a terminal supports a plurality of sets of TCI states reported by the terminal.

According to another aspect of embodiments of the present disclosure, a terminal is provided, and includes: a processor; a transceiver connected to the processor; and a memory for storing instructions executable by the processor. The processor is configured to load and execute the executable instructions to implement any above method for reporting the terminal capability.

According to another aspect of embodiments of the present disclosure, a chip is provided, and configured to implement any above method for reporting the terminal capability.

According to an aspect of embodiments of the present disclosure, a computer-readable storage medium is provided, and the computer-readable storage medium stores at least one instruction, at least one program, a code set or an instruction set. The at least an instruction, the at least one program, the code set or the instruction set is loaded and executed by a processor to implement the above method for reporting the terminal capability.

The technical solution in the embodiments of the present disclosure includes at least the following beneficial effects: the terminal reports the capability information and/or a transmission mode combination of different channels supported by the terminal to the access network device, facilitating the diversification of the terminal and the base station to configure an M-TRP transmission of the TCI state for the terminal in different ways.

### BRIEF DESCRIPTION OF THE DRAWINGS

In order to clearly illustrate technical solutions of embodiments of the present disclosure, a brief description of drawings used in the embodiments is given below. Obviously, the drawings in the following description are only part embodiments of the present disclosure, and for those skilled in the art, other drawings can be obtained according to these drawings without creative labor.
FIG. 1 is a schematic diagram of a communication system according to an embodiment of the present disclosure.
FIG. 2 is a schematic diagram of a PDCCH according to an embodiment of the present disclosure.
FIG. 3 is a flow chart of a method for reporting a terminal capability according to an embodiment of the present disclosure.
FIG. 4 is a schematic diagram of a PDCCH according to an embodiment of the present disclosure.
FIG. 5 is a schematic diagram of a method for indicating a TCI state according to an embodiment of the present disclosure.
FIG. 6 is a schematic diagram of a method for indicating a TCI state according to an embodiment of the present disclosure.
FIG. 7 is a schematic diagram of a method for indicating a TCI state according to an embodiment of the present disclosure.
FIG. 8 is a flow chart of a method for reporting a terminal capability according to an embodiment of the present disclosure.
FIG. 9 is a block diagram of an apparatus for reporting a terminal capability according to an embodiment of the present disclosure.
FIG. 10 is a block diagram of an apparatus for reporting a terminal capability according to an embodiment of the present disclosure.
FIG. 11 is a schematic diagram of a terminal according to an embodiment of the present disclosure.
FIG. 12 is a schematic diagram of a network device according to an embodiment of the present disclosure.

### DETAILED DESCRIPTION

Reference will now be made in detail to illustrative embodiments, examples of which are illustrated in the accompanying drawings. When the following description refers to the accompanying drawings, the same numbers in different drawings represent the same or similar elements, unless otherwise specified. The implementations set forth in the following illustrative embodiments do not represent all implementations consistent with the present disclosure. Instead, they are merely examples of devices and methods consistent with aspects of the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the present disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without departing from the scope of the embodiments of the present disclosure, the first information may also be referred to as the second information, and likewise the second information may be referred to as the first information. Depending on the context, the words "if" and "responding to" used here can be interpreted as "when", "while" or "in response to determining".

The network architecture and service scenarios in the embodiments of the present disclosure are intended to clearly explain the technical solution of the embodiments of the present disclosure, and do not constitute a limitation on the technical solution in the embodiments of the present disclosure. Those skilled in the art can understand that, with the evolution of the network architecture and the emergence of new service scenarios, the technical solution in the embodiments of the present disclosure can also solve similar technical problems.

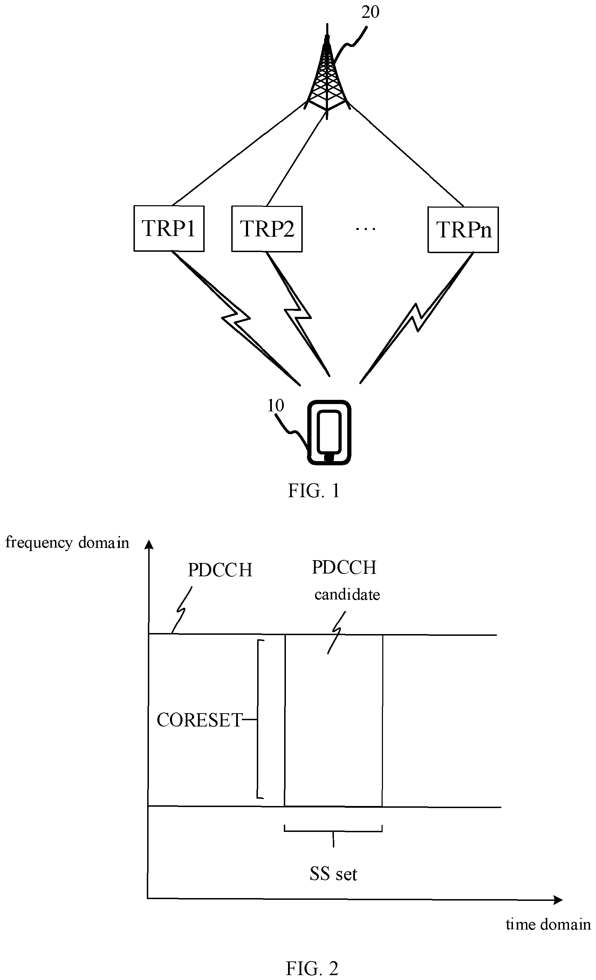

FIG. 1 is a schematic diagram of a communication system according to an embodiment of the present disclosure. The communication system includes a terminal 10 and an access network device 20.

A plurality of terminals 10 are usually provided, and one or more terminals 10 can be distributed in a cell managed by each access network device 20. The terminal 10 may include a variety of handheld devices, vehicle-mounted devices, wearable devices, computing devices with a wireless communication function, or other processing devices connected to wireless modems, and various forms of user equipment (UE), mobile stations (MS), etc. For a convenient description, the devices mentioned above in the embodiments of the present disclosure are collectively referred to as the terminal.

The access network device 20 is an apparatus deployed in an access network to provide a wireless communication function for the terminal 10. The access network device 20 may include various forms of macro base stations, micro base stations, relay stations, and access points. In systems adopting different wireless access technologies, a name of a device that has the function of the access network device may be different, such as gNodeB or gNB in the 5G NR system. As the communication technology evolves, the name "access network device" may change. For a convenient description, in the embodiments of the present disclosure, the above apparatuses that provide the wireless communication function for the terminal 10 are collectively referred to as the access network device. A connection can be established between the access network device 20 and the terminal 10 via an air interface, and communication, including a signaling interaction and a data interaction, can be made through the connection. A plurality of access network devices 20 can be provided, and two adjacent access network devices 20 can also communicate with each other in a wired or wireless manner. The terminal 10 can switch between different access network device 20, that is, establishing a connection with different access network device 20.

Optionally, at least two transmission reception points (TRP) are set on the access network device 20. A communication connection is established between the terminal 10 and the at least two TRPs by a receiving TCI state and/or a sending TCI state. Optionally, different TRPs use different receiving TCI states and/or sending TCI states. Each TRP corresponds to at least one channel transmission mode. For example, the channel between a TRP1 and the terminal 10 is a physical downlink control channel (PDCCH), and the channel between a TRP2 and the terminal 10 is a physical uplink shared channel (PUSCH). For example, the terminal 10 determines the receiving TCI state required to receive the PDCCH based on a joint TCI state or a downlink TCI state; and the terminal 10 determines the sending TCI state required to send the PUSCH based on a joint TCI state or an uplink TCI state.

"5G NR System" in the embodiments of the present disclosure may also be referred to as a 5G system or an NR system, which can be understood by those skilled in the art. The technical solution in the embodiments of the present disclosure can be applied to the 5G NR system or a subsequent evolution system of the 5G NR system.

In the new radio (NR) technology, especially when the communication frequency band is in the frequency range 2, since the high-frequency channel decays in a fast speed, the transmission and reception based on the TCI state need to be used in order to ensure the coverage.

For example, as illustrated in FIG. 2, the PDCCH is taken as an example. The PDCCH includes at least one PDCCH candidate. Here, one PDCCH candidate is taken as an example. The PDCCH candidate belongs to a search space (SS) set. The SS set is used to describe a time domain position of the PDCCH search, and the SS set is associated with a control resource set (CORESET). The CORESET is used to describe a frequency domain characteristic of the PDCCH and the number of symbols occupied in the time domain of the PDCCH. Therefore, the above briefly describes the association between the PDCCH candidate, the SS set, and the CORESET in the PDCCH.

In order to reduce a signaling overhead, a unified TCI state is desired to be used. When the base station indicates a unified TCI state for downlink, the TCI state can be applied to a physical downlink shared channel (PDSCH), at least part of the PDCCH (such as a user equipment dedicated PDCCH) and some downlink reference signals of the terminal. When the base station indicates a unified TCI state for uplink, the TCI state can be applied to the PUSCH, at least part of a physical uplink control channel (PUCCH), and some uplink reference signals of the terminal. The unified TCI state may currently be indicated separately with a separate uplink TCI state and a separate downlink TCI state, or be indicated jointly with an uplink and downlink joint TCI state.

The separate uplink TCI state is applicable to an uplink channel/reference signal, and the separate downlink TCI state is applicable to a downlink channel/reference signal. The joint TCI state is applicable to both the uplink channel/reference signal and the downlink channel/reference signal.

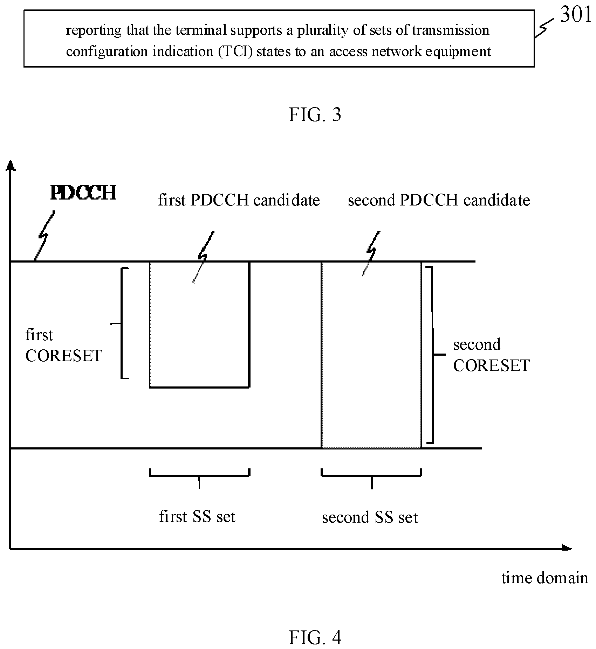

FIG. 3 is a flow chart of a method for reporting a terminal capability according to an embodiment of the present disclosure. The method can be applied to the terminal in the communication system illustrated in FIG. 1, and includes following steps.

At step 301, that a terminal supports a plurality of sets of TCI states reported by the terminal is received.

The TCI state is configured to inform the terminal to receive the PDCCH/PDSCH by using the same quasi co-location (QCL) information or spatial Rx parameter as receiving which reference signal (a synchronization signal block (SSB) or a channel state information reference signal (CSI-RS)) sent by the base station; or, inform the terminal to send the PUCCH/PUSCH by using the same QCL information or spatial relation information or spatial filter as sending which reference signal (such as a sounding reference signal (SRS) or a CSI-RS).

Optionally, the TCI states have a one-to-one correspondence with the TRPs, and the plurality of sets of TCI states indicate that the number of the TCI states is at least 2, and the number of the TRPs corresponding to the TCI states is also at least 2.

For example, as illustrated in FIG. 4, the PDCCH includes two PDCCH candidates, that is, a first PDCCH candidate and a second PDCCH candidate. The first PDCCH candidate belongs to a first SS set, and the first SS set is associated with a first CORESET. The second PDCCH candidate belongs to a second SS set, and the second SS set is associated with a second CORESET. The first CORESET is configured with a first TCI state, and the second CORESET is configured with a second TCI state. The first PDCCH candidate corresponds to a first TRP, and the second PDCCH candidate corresponds to a second TRP. Therefore, the terminal can report a capability that the terminal supports the plurality of sets of TCI states to the access network device, so that the access network device indicates a plurality of sets of TCI states to the terminal.

It should be noted that time domain resources of the first PDCCH candidate and the second PDCCH candidate are the same; or frequency domain resources of the first PDCCH candidate and the second PDCCH candidate are the same; or time domain resources of the first PDCCH candidate and the second PDCCH candidate are the same, and frequency domain resources of the first PDCCH candidate and the second PDCCH candidate are the same.

Optionally, a single set of TCI states includes a joint TCI state, and the joint TCI state is one TCI state and configured to indicate both an uplink channel/reference signal and a downlink channel/reference signal; or, a single set of TCI states includes at least one of a downlink TCI state or an uplink TCI state, the uplink TCI state is applicable to an uplink channel/reference signal, and the downlink TCI state is applicable to a downlink channel/reference signal.

Optionally, the terminal reports capability information of supporting the plurality of sets of TCI states to the access network device.

Optionally, the capability information is configured to indicate that the terminal can support the plurality of sets of TCI states. The plurality of sets here can be N sets, and the N is an integer greater than 1, for example, N=2, 3, 4, ......, etc.

Optionally, the capability information includes at least one of: supporting a plurality of joint TCI states; supporting a plurality of downlink TCI states and/or a plurality of uplink TCI states; or supporting at least one joint TCI state, and at least one downlink TCI state and/or at least one uplink TCI state.

Optionally, a transmission mode combination of different channels supported by the terminal is reported to the access network device, and the transmission mode combination is a transmission based on one set of TCI states or a transmission based on the plurality of sets of TCI states.

Optionally, the transmission mode combination of different channels includes at least one of: (1) the PDCCH being configured for the transmission based on the plurality of sets of TCI states, and at least one channel other than the PDCCH being configured for the transmission based on the one set of TCI states, in which the at least one channel includes at least one of the PDSCH, the PUCCH, or the PUSCH; (2) the PDSCH being configured for the transmission based on the plurality of sets of TCI states, and at least one channel other than the PDSCH being configured for the transmission based on the one set of TCI states, in which the at least one channel includes at least one of the PDCCH, the PUCCH, or the PUSCH; (3) the PUCCH being configured for the transmission based on the plurality of sets of TCI states, and at least one channel other than the PUCCH being configured for the transmission based on the one set of TCI states, in which the at least one channel includes at least one of the PDSCH, the PDCCH, or the PUSCH; (4) the PUSCH being configured for the transmission based on the plurality of sets of TCI states, and at least one channel other than the PUSCH being configured for the transmission based on the one set of TCI states, in which the at least one channel includes at least one of the PDSCH, the PUCCH, or the PDCCH; (5) a downlink (DL) channel being configured for the transmission based on the plurality of sets of TCI states, and an uplink (UL) channel being configured for the transmission based on the one set of TCI states, in which the DL channel includes at least one of the PDCCH or the PDSCH, and the UL channel includes at least one of the PUCCH or the PUSCH; (6) the UL channel being configured for the transmission based on the plurality of sets of TCI states, and the DL channel being configured for the transmission based on the one set of TCI states, in which the DL channel includes at least one of the PDCCH or the PDSCH, and the UL channel includes at least one of the PUCCH or the PUSCH; (7) the DL channel and the UL channel being both configured for the transmission based on the plurality of sets of TCI states, in which the DL channel includes at least one of the PDCCH or the PDSCH, and the UL channel includes at least one of the PUCCH or the PUSCH.

In summary, the terminal reports the capability information and/or the transmission mode combination of different channels supported by the terminal to the access network device, facilitating the diversification of the terminal and the base station to configure the TCI state supported by the terminal and/or the transmission mode combination of different channels supported by the terminal for the terminal.

Implementation 1: in an optional embodiment, when the PDCCH is configured for the transmission based on the plurality of sets of TCI states, each set of TCI states in the plurality of sets of TCI states includes a downlink TCI state or a joint TCI state, and the PDCCH can be configured with the following transmission methods.
(1) PDCCH repetition method: one reception of the PDCCH includes n PDCCH candidates, the n PDCCH candidates have a one-to-one correspondence with n SS sets, and the n SS sets have a link relationship, in which the n is a positive integer greater than 1.

Optionally, the PDCCH candidates have a one-to-one correspondence with the TRPs, that is, the number of the PDCCH candidates equals to the number of the TRPs.

Optionally, the n SS sets have a one-to-one correspondence with n CORESETs, and each CORESET is configured with a TCI state.

Optionally, the n SS sets can be the same or different.

Optionally, the n CORESETs can be the same or different.

Optionally, the n PDCCH candidates are transmitted via frequency division multiplexing (FDM), or the n PDCCH candidates are transmitted via FDM, or the n PDCCH candidates are transmitted via the same time-frequency resource.

(2) Single frequency network (SFN) method: the CORESET corresponding to the PDCCH is configured with at least two TCI states, and each TCI state includes a joint TCI state or a downlink TCI state.

For example, one reception of the PDCCH corresponds to one PDCCH candidate, the CORESET corresponding to the PDCCH candidate is configured with two TCI states, and each of the two TCI states is the joint TCI state and/or the downlink TCI state.

Implementation 2: in an optional embodiment, when the PDSCH is configured for the transmission based on the plurality of sets of TCI states, each set of TCI states in the plurality of sets of TCI states includes a downlink TCI state or a joint TCI state, and the PDSCH is configured with at least one of: a repetition pattern, a repetition number or a demodulation reference signal (DMRS) port of at least two code division multiplexing (CDM) groups. The repetition pattern includes at least one of a frequency division multiplexing or a time division multiplexing.

The PDSCH can be configured with the following transmission methods.
(1) FDM method: frequency domain resources of n PDSCH occasions configured to transmit the PDSCH are different, and TCI states of the n PDSCH occasions are different.

Optionally, time domain resources of the n PDSCH occasions configured to transmit the PDSCH are the same.

Optionally, the number of the PDSCH occasions is an integer multiple of the number of the TRPs. For example, when 2 TRPs are provided, the number of the PDSCH occasions can be 2 or 2*2=4.

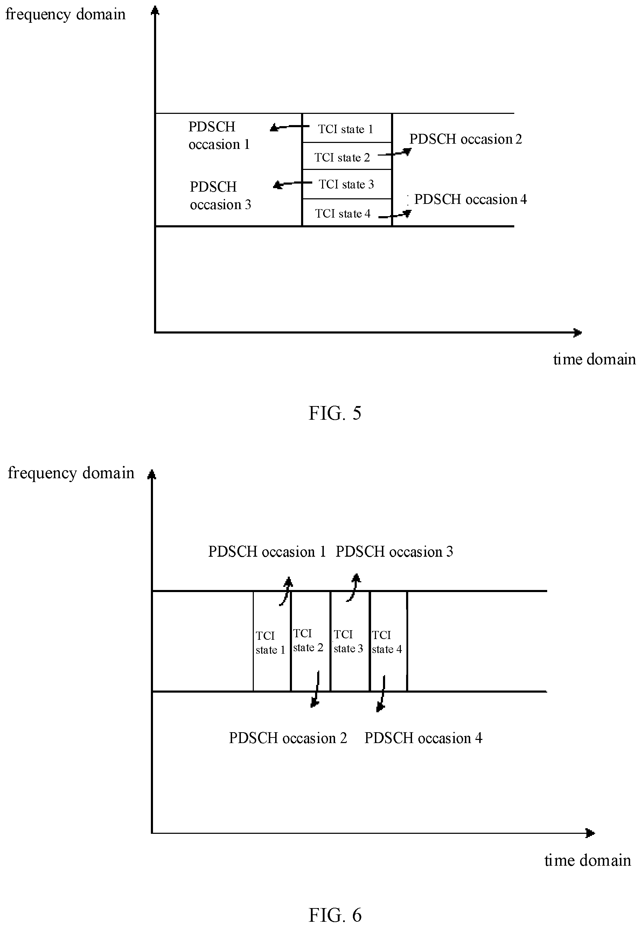

For example, as illustrated in FIG. 5, it is assumed that 2 PDSCH occasions are configured to transmit the PDSCH, namely, a PDSCH occasion 1 and a PDSCH occasion 2. The PDSCH occasion 1 corresponds to a TCI state 1, and the PDSCH occasion 2 corresponds to a TCI state 2. Moreover, the PDSCH occasion 1 and the PDSCH occasion 2 occupy different frequency domain resources, and the PDSCH occasion 1 and the PDSCH occasion 2 occupy the same time domain resource.

For example, as illustrated in FIG. 5, it is assumed that 4 PDSCH occasions are configured to transmit the PDSCH, namely, a PDSCH occasion 1, a PDSCH occasion 2, a PDSCH occasion 3 and a PDSCH occasion 4. The PDSCH occasion 1 corresponds to a TCI state 1, the PDSCH occasion 2 corresponds to a TCI state 2, the PDSCH occasion 3 corresponds to a TCI state 3, and the PDSCH occasion 4 corresponds to a TCI state 4. Moreover, the PDSCH occasion 1, the PDSCH occasion 2, the PDSCH occasion 3 and the PDSCH occasion 4 occupy different frequency domain resources, and the PDSCH occasion 1, the PDSCH occasion 2, the PDSCH occasion 3 and the PDSCH occasion 4 occupy the same time domain resource.

(2) Time division multiplexing (TDM) method: time domain resources of n PDSCH occasions configured to transmit the PDSCH are different, and TCI states of the n PDSCH occasions are different.

Optionally, frequency domain resources of the n PDSCH occasions configured to transmit the PDSCH are the same.

For example, as illustrated in FIG. 6, it is assumed that 2 PDSCH occasions are configured to transmit the PDSCH, namely, a PDSCH occasion 1 and a PDSCH occasion 2. The PDSCH occasion 1 corresponds to a TCI state 1, and the PDSCH occasion 2 corresponds to a TCI state 2. Moreover, the PDSCH occasion 1 and the PDSCH occasion 2 occupy different time domain resources, and the PDSCH occasion 1 and the PDSCH occasion 2 occupy the same frequency domain resource.

For example, as illustrated in FIG. 6, it is assumed that 4 PDSCH occasions are configured to transmit the PDSCH, namely, a PDSCH occasion 1, a PDSCH occasion 2, a PDSCH occasion 3 and a PDSCH occasion 4. The PDSCH occasion 1 corresponds to a TCI state 1, the PDSCH occasion 2 corresponds to a TCI state 2, the PDSCH occasion 3 corresponds to a TCI state 3, and the PDSCH occasion 4 corresponds to a TCI state 4. Moreover, the PDSCH occasion 1, the PDSCH occasion 2, the PDSCH occasion 3 and the PDSCH occasion 4 occupy different time domain resources, and the PDSCH occasion 1, the PDSCH occasion 2, the PDSCH occasion 3 and the PDSCH occasion 4 occupy the same frequency domain resource.

(3) Space division multiplexing (SDM) method: a DMRS port configured to transmit the PDSCH correspond to at least two CDM groups, and the at least two CDM groups correspond to different TCI states.

Optionally, time domain resources and frequency domain resources of the PDSCHs corresponding to the two CDM groups configured to transmit the PDSCH are the same.

(4) SFN method: a TCI state configured to transmit the PDSCH includes at least two TCI states, and each TCI state includes a joint TCI state or a downlink TCI state.

Optionally, time domain resources and frequency domain resources configured to transmit the PDSCH are the same, and the DMRS ports configured to transmit a demodulation reference signal of the PDSCH are the same.

For example, it is assumed that the TCI state configured to transmit the PDSCH includes two TCI states, namely, a downlink TCI state 1 and a downlink TCI state 2. The PDSCHs corresponding to the two TCI states occupy the same time domain resource and the same frequency domain resource, and the DMRS ports configured to transmit the demodulation reference signals of the PDSCHs are the same.

For example, it is assumed that the TCI state configured to transmit the PDSCH includes two TCI states, namely, a joint TCI state 1 and a joint TCI state 2. The PDSCHs corresponding to the two TCI states occupy the same time domain resource and the same frequency domain resource, and the DMRS ports configured to transmit the demodulation reference signals of the PDSCHs are the same.

For example, it is assumed that the TCI state configured to transmit the PDSCH includes two TCI states, namely, a joint TCI state 1 and a downlink TCI state 2. The PDSCHs corresponding to the two TCI states occupy the same time domain resource and the same frequency domain resource, and the DMRS ports configured to transmit the demodulation reference signals of the PDSCHs are the same.

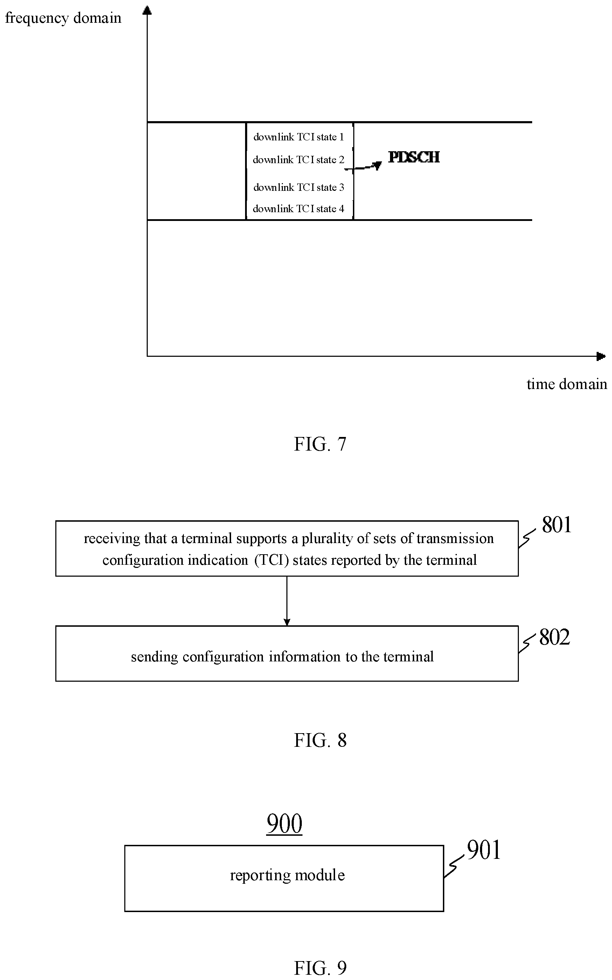

For example, as illustrated in FIG. 7, it is assumed that the TCI state configured to transmit the PDSCH includes 4 TCI states, namely, a downlink TCI state 1, a downlink TCI state 2, a downlink TCI state 3 and a downlink TCI state 4. The 4 TCI states occupy the same time domain resource and the same frequency domain resource, and the DMRS ports configured to transmit the demodulation reference signals of the PDSCHs are the same.

Implementation 3: in an optional embodiment, when the PUCCH is configured for the transmission based on the plurality of sets of TCI states, each set of TCI states in the plurality of sets of TCI states includes an uplink TCI state or a joint TCI state, and the PUCCH is associated with at least one of: at least two spatial relation information, at least two TCI states, or at least two power control parameter sets. The TCI state includes the uplink TCI state or the joint TCI state.

The PUCCH can be configured with the following transmission methods.
(1) FDM method: frequency domain resources of n PUCCH occasions configured to transmit the PUCCH are different, and TCI states of the n PUCCH occasions are different.

Optionally, time domain resources of the n PUCCH occasions configured to transmit the PUCCH are the same.

Optionally, the number of the PUCCH occasions is an integer multiple of the number of the TRPs. For example, when 2 TRPs are provided, the number of the PUCCH occasions can be 2 or 2*2=4.

For example, it is assumed that 2 PUCCH occasions are configured to transmit the PUCCH, namely, a PUCCH occasion 1 and a PUCCH occasion 2. The PUCCH occasion 1 corresponds to a TCI state 1, and the PUCCH occasion 2 corresponds to a TCI state 2. Moreover, the PUCCH occasion 1 and the PUCCH occasion 2 occupy different frequency domain resources, and the PUCCH occasion 1 and the PUCCH occasion 2 occupy the same time domain resource.

For example, it is assumed that 4 PUCCH occasions are configured to transmit the PUCCH, namely, a PUCCH occasion 1, a PUCCH occasion 2, a PUCCH occasion 3 and a PUCCH occasion 4. The PUCCH occasion 1 corresponds to a TCI state 1, the PUCCH occasion 2 corresponds to a TCI state 2, the PUCCH occasion 3 corresponds to a TCI state 3, and the PUCCH occasion 4 corresponds to a TCI state 4. Moreover, the PUCCH occasion 1, the PUCCH occasion 2, the PUCCH occasion 3 and the PUCCH occasion 4 occupy different frequency domain resources, and the PUCCH occasion 1, the PUCCH occasion 2, the PUCCH occasion 3 and the PUCCH occasion 4 occupy the same time domain resource.

(2) TDM method: time domain resources of n PUCCH occasions configured to transmit the PUCCH are different, and TCI states of the n PUCCH occasions are different.

Optionally, frequency domain resources of the n PUCCH occasions configured to transmit the PUCCH are the same.

For example, it is assumed that 2 PUCCH occasions are configured to transmit the PUCCH, namely, a PUCCH occasion 1 and a PUCCH occasion 2. The PUCCH occasion 1 corresponds to a TCI state 1, and the PUCCH occasion 2 corresponds to a TCI state 2. Moreover, the PUCCH occasion 1 and the PUCCH occasion 2 occupy different time domain resources, and the PUCCH occasion 1 and the PUCCH occasion 2 occupy the same frequency domain resource.

For example, it is assumed that 4 PUCCH occasions are configured to transmit the PUCCH, namely a PUCCH occasion 1, a PUCCH occasion 2, a PUCCH occasion 3 and a PUCCH occasion 4. The PUCCH occasion 1 corresponds to a TCI state 1, the PUCCH occasion 2 corresponds to a TCI state 2, the PUCCH occasion 3 corresponds to a TCI state 3, and the PUCCH occasion 4 corresponds to a TCI state 4. Moreover, the PUCCH occasion 1, the PUCCH occasion 2, the PUCCH occasion 3 and the PUCCH occasion 4 occupy different time domain resources, and the PUCCH occasion 1, the PUCCH occasion 2, the PUCCH occasion 3 and the PUCCH occasion 4 occupy the same frequency domain resource.

(3) SDM method: a DMRS port configured to transmit the PUCCH corresponds to at least two CDM groups, and the at least two CDM groups correspond to different TCI states.

Optionally, time domain resources and frequency domain resources of the PUCCHs corresponding to the two CDM groups configured to transmit the PUCCH are the same.

(4) SFN method: the TCI state configured to transmit the PUCCH includes at least two TCI states, and each TCI state includes a joint TCI state or an uplink TCI state.

Optionally, time domain resources and frequency domain resources configured to transmit the PUCCH are the same, and the DMRS ports configured to transmit a demodulation reference signal of the PUCCH are the same.

For example, it is assumed that the TCI state configured to transmit the PUCCH includes two TCI states, namely, an uplink TCI state 1 and an uplink TCI state 2. The PUCCHs corresponding to the two TCI states occupy the same time domain resource and the same frequency domain resource, and the DMRS ports configured to transmit the demodulation reference signals of the PUCCHs are the same.

For example, it is assumed that the TCI state configured to transmit the PUCCH includes two TCI states, namely, a joint TCI state 1 and a joint TCI state 2. The PUCCHs corresponding to the two TCI states occupy the same time domain resource and the same frequency domain resource, and the DMRS ports configured to transmit the demodulation reference signals of the PUCCHs are the same.

For example, it is assumed that the TCI state configured to transmit the PUCCH includes two TCI states, namely, a joint TCI state 1 and an uplink TCI state 2. The PUCCHs corresponding to the two TCI states occupy the same time domain resource and the same frequency domain resource, and the DMRS ports configured to transmit the demodulation reference signals of the PUCCHs are the same.

Implementation 4: in an optional embodiment, when the PUSCH is configured for the transmission based on the plurality of sets of TCI states, each set of TCI states in the plurality of sets of TCI states includes an uplink TCI state or a joint TCI state, and the PUSCH is associated with at least one of: at least two SRS resource indications, at least two layer domains, a DMRS port of at least two CDM groups, at least two PUSCH precoder domains, or at least two SRS source settings.

The PUSCH can be configured with the following transmission methods.
(1) FDM method: frequency domain resources of n PUSCH occasions configured to transmit the PUSCH are different, and TCI states of the n PUSCH occasions are different.

Optionally, time domain resources of the n PUSCH occasions configured to transmit the PUSCH are the same.

Optionally, the number of the PUSCH occasions is an integer multiple of the number of the TRPs. For example, when 2 TRPs are provided, the number of the PUSCH occasions can be 2 or 2*2=4.

For example, as illustrated in FIG. 5, it is assumed that 2 PUSCH occasions are configured to transmit the PUSCH, namely, a PUSCH occasion 1 and a PUSCH occasion 2. The PUSCH occasion 1 corresponds to a TCI state 1, and the PUSCH occasion 2 corresponds to a TCI state 2. Moreover, the PUSCH occasion 1 and the PUSCH occasion 2 occupy different frequency domain resources, and the PUSCH occasion 1 and the PUSCH occasion 2 occupy the same time domain resource.

For example, as illustrated in FIG. 5, it is assumed that 4 PUSCH occasions are configured to transmit the PUSCH, namely, a PUSCH occasion 1, a PUSCH occasion 2, a PUSCH occasion 3 and a PUSCH occasion 4. The PUSCH occasion 1 corresponds to a TCI state 1, the PUSCH occasion 2 corresponds to a TCI state 2, the PUSCH occasion 3 corresponds to a TCI state 3, and the PUSCH occasion 4 corresponds to a TCI state 4. Moreover, the PUSCH occasion 1, the PUSCH occasion 2, the PUSCH occasion 3 and the PUSCH occasion 4 occupy different frequency domain resources, and the PUSCH occasion 1, the PUSCH occasion 2, the PUSCH occasion 3 and the PUSCH occasion 4 occupy the same time domain resource.

(2) TDM method: time domain resources of n PUSCH occasions configured to transmit the PUSCH are different, and TCI states of the n PUSCH occasions are different.

Optionally, frequency domain resources of the n PUSCH occasions configured to transmit the PUSCH are the same.

For example, it is assumed that 2 PUSCH occasions are configured to transmit the PUSCH, namely, a PUSCH occasion 1 and a PUSCH occasion 2. The PUSCH occasion 1 corresponds to a TCI state 1, and the PUSCH occasion 2 corresponds to a TCI state 2. Moreover, the PUSCH occasion 1 and the PUSCH occasion 2 occupy different time domain resources, and the PUSCH occasion 1 and the PUSCH occasion 2 occupy the same frequency domain resource.

For example, it is assumed that 4 PUSCH occasions are configured to transmit the PUSCH, namely a PUSCH occasion 1, a PUSCH occasion 2, a PUSCH occasion 3 and a PUSCH occasion 4. The PUSCH occasion 1 corresponds to a TCI state 1, the PUSCH occasion 2 corresponds to a TCI state 2, the PUSCH occasion 3 corresponds to a TCI state 3, and the PUSCH occasion 4 corresponds to a TCI state 4. Moreover, the PUSCH occasion 1, the PUSCH occasion 2, the PUSCH occasion 3 and the PUSCH occasion 4 occupy different time domain resources, and the PUSCH occasion 1, the PUSCH occasion 2, the PUSCH occasion 3 and the PUSCH occasion 4 occupy the same frequency domain resource.

(3) SDM method: a DMRS port configured to transmit the PUSCH corresponds to at least two CDM groups, and the at least two CDM groups correspond to different TCI states.

Optionally, time domain resources and frequency domain resources of the PUSCHs corresponding to the two CDM groups configured to transmit the PUSCH are the same.

(4) SFN method: the TCI state configured to transmit the PUSCH includes at least two TCI states, and each TCI state includes a joint TCI state or an uplink TCI state.

Optionally, time domain resources and frequency domain resources configured to transmit the PUSCH are the same, and the DMRS ports configured to transmit a demodulation reference signal of the PUSCH are the same.

For example, it is assumed that the TCI state configured to transmit the PUSCH includes two TCI states, namely, an uplink TCI state 1 and an uplink TCI state 2. The PUSCHs corresponding to the two TCI states occupy the same time domain resource and the same frequency domain resource, and the DMRS ports configured to transmit the demodulation reference signals of the PUSCHs are the same.

For example, it is assumed that the TCI state configured to transmit the PUSCH includes two TCI states, namely, a joint TCI state 1 and a joint TCI state 2. The PUSCHs corresponding to the two TCI states occupy the same time domain resource and the same frequency domain resource, and the DMRS ports configured to transmit the demodulation reference signals of the PUSCHs are the same.

For example, it is assumed that the TCI state configured to transmit the PUSCH includes two TCI states, namely, a joint TCI state 1 and an uplink TCI state 2. The PUSCHs corresponding to the two TCI states occupy the same time domain resource and the same frequency domain resource, and the DMRS ports configured to transmit the demodulation reference signals of the PUSCHs are the same.

For example, it is assumed that the TCI state configured to transmit the PUSCH includes 4 TCI states, namely, an uplink TCI state 1, an uplink TCI state 2, an uplink TCI state 3 and an uplink TCI state 4. The four TCI states occupy the same time domain resource and the same frequency domain resource, and the DMRS ports configured to transmit the demodulation reference signal of the PUSCH are the same.

In an optional embodiment, the transmission mode combination of different channels includes at least one of: (1) the PDCCH being configured for the transmission based on the plurality of sets of TCI states, and a channel other than the PDCCH being configured for the transmission based on the one set of TCI states, in which a method for configuring the PDCCH can refer to the above implementation 1; (2) the PDSCH being configured for the transmission based on the plurality of sets of TCI states, and a channel other than the PDSCH being configured for the transmission based on the one set of TCI states, in which a method for configuring the PDSCH can refer to the above implementation 2; (3) the PUCCH being configured for the transmission based on the plurality of sets of TCI states, and a channel other than the PUCCH being configured for the transmission based on the one set of TCI states, in which a method for configuring the PUCCH can refer to the above implementation 3; (4) the PUSCH being configured for the transmission based on the plurality of sets of TCI states, and a channel other than the PUSCH being configured for the transmission based on the one set of TCI states, in which a method for configuring a PUSCH can refer to the above implementation 4; (5) the DL channel being configured for the transmission based on the plurality of sets of TCI states, and the UL channel being configured for the transmission based on the one set of TCI states, in which a method for configuring the PDCCH and a method for configuring the PDSCH can refer to the above implementation 1 and implementation 2; (6) the UL channel being configured for the transmission based on the plurality of sets of TCI states, and the DL channel being configured for the transmission based on the one set of TCI states, in which a method for configuring the PUCCH and a method for configuring the PUSCH can refer to the above implementation 3 and implementation 4; (7) the DL channel and the UL channel being both configured for the transmission based on the plurality of sets of TCI states, in which a method for configuring the PDCCH, a method for configuring the PDSCH, a method for configuring the PUCCH, and a method for configuring the PUSCH can refer to the above implementation 1, implementation 2, implementation 3 and implementation 4.

Optionally, after determining the transmission mode combination of different channels, the terminal sends the capability information corresponding to a target transmission mode combination in the transmission mode combination of different channels to the access network device. Therefore, the capability information can be generated according to the transmission mode combination. For example, the terminal generates capability information A according to the above transmission mode combination (1), and the same terminal generates capability information B according to the above transmission mode combination (3).

FIG. 8 is a flow chart of a method for reporting a terminal capability according to an embodiment of the present disclosure. This method can be applied to the access network device in the communication system illustrated in FIG. 1. The method includes the following steps.

At step 801, information that a terminal supports a plurality of sets of TCI states reported by the terminal is received.

The TCI state is configured to inform the terminal to receive the PDCCH/PDSCH by using the same quasi co-location (QCL) information or spatial Rx parameter as receiving which reference signal (a synchronization signal block (SSB)) or a channel state information reference signal (CSI-RS)) sent by the base station; or, inform the terminal to send the PUCCH/PUSCH by using the same QCL information or spatial relation information or spatial filter as sending which reference signal (such as a sounding reference signal (SRS) or a CSI-RS).

Optionally, the TCI states have a one-to-one correspondence with the TRPs, and the plurality of sets of TCI states indicate that the number of the TCI states is at least 2, and the number of the TRPs corresponding to the TCI states is also at least 2.

Optionally, a single set of TCI states includes a joint TCI state, and the joint TCI state is one TCI state and configured to indicate both an uplink channel/reference signal and a downlink channel/reference signal; or, a single set of TCI states includes at least one of a downlink TCI state or an uplink TCI state, the uplink TCI state is applicable to an uplink channel/reference signal, and the downlink TCI state is applicable to a downlink channel/reference signal.

Optionally, capability information of supporting the plurality of sets of TCI states reported by the terminal is received.

Optionally, the capability information is configured to indicate that the terminal can support the plurality of sets of TCI states. The plurality of sets here can be N sets, and the N is an integer greater than 1, such as N=2, 3, 4, ......, etc.

Optionally, the capability information includes at least one of: supporting a plurality of joint TCI states; supporting a plurality of downlink TCI states and/or a plurality of uplink TCI states; or supporting at least one joint TCI state, and at least one downlink TCI state and/or at least one uplink TCI state.

Optionally, a transmission mode combination of different channels supported by the terminal is received, and the transmission mode combination is a transmission based on one set of TCI states or a transmission based on the plurality of sets of TCI states.

Optionally, the transmission mode combination of different channels includes at least one of: (1) the PDCCH being configured for the transmission based on the plurality of sets of TCI states, and at least one channel other than the PDCCH being configured for the transmission based on the one set of TCI states, in which the at least one channel includes at least one of the PDSCH, the PUCCH, or the PUSCH; (2) the PDSCH being configured for the transmission based on the plurality of sets of TCI states, and at least one channel other than the PDSCH being configured for the transmission based on the one set of TCI states, in which the at least one channel includes at least one of the PDCCH, the PUCCH, or the PUSCH; (3) the PUCCH being configured for the transmission based on the plurality of sets of TCI states, and at least one channel other than the PUCCH being configured for the transmission based on the one set of TCI states, in which the at least one channel includes at least one of the PDSCH, the PDCCH, or the PUSCH; (4) the PUSCH being configured for the transmission based on the plurality of sets of TCI states, and at least one channel other than the PUSCH being configured for the transmission based on the one set of TCI states, in which the at least one channel includes at least one of the PDSCH, the PUCCH, or the PDCCH; (5) a DL channel being configured for the transmission based on the plurality of sets of TCI states, and an UL channel being configured for the transmission based on the one set of TCI states, in which the DL channel includes at least one of the PDCCH or the PDSCH, and the UL channel includes at least one of the PUCCH or the PUSCH; (6) the UL channel being configured for the transmission based on the plurality of sets of TCI states, and the DL channel being configured for the transmission based on the one set of TCI states, in which the DL channel includes at least one of the PDCCH or the PDSCH, and the UL channel includes at least one of the PUCCH or the PUSCH; (7) the DL channel and the UL channel being both configured for the transmission based on the plurality of sets of TCI states, in which the DL channel includes at least one of the PDCCH or the PDSCH, and the UL channel includes at least one of the PUCCH or the PUSCH.

At step 802, configuration information is sent to the terminal.

The configuration information is generated based on the capability information of supporting the plurality of sets of TCI states reported by the terminal and/or the transmission mode combination of different channels supported by the terminal.

Step 802 is an optional step which can be performed or not be performed.

In summary, the terminal reports the capability information and/or the transmission mode combination of different channels supported by the terminal to the access network device, facilitating the diversification of the terminal and the base station to configure an M-TRP transmission of the TCI state for the terminal in different ways.

FIG. 9 is a block diagram of an apparatus for reporting a terminal capability according to an embodiment of the present disclosure. As illustrated in FIG. 9, the apparatus includes a reporting module 901.

The reporting module 901 is configured to report that a terminal supports a plurality of sets of TCI states to an access network device.

In an optional design, a single set of TCI states includes a joint TCI state, and the joint TCI state is configured to indicate both an uplink channel/reference signal and a downlink channel/reference signal; or, a single set of TCI states includes at least one of a downlink TCI state or an uplink TCI state.

In an optional design, the reporting module 901 is further configured to report capability information of supporting the plurality of sets of TCI states to the access network device.

In an optional design, the capability information includes at least one of: supporting a plurality of joint TCI states; supporting a plurality of downlink TCI states and/or a plurality of uplink TCI states; or supporting at least one joint TCI state, and at least one downlink TCI state and/or at least one uplink TCI state.

In an optional design, the reporting module 901 is further configured to report a transmission mode combination of different channels supported by the terminal to the access network device, and the transmission mode combination is a transmission based on one set of TCI states or a transmission based on the plurality of sets of TCI states.

In an optional design, the transmission mode combination of different channels includes at least one of: a PDCCH being configured for the transmission based on the plurality of sets of TCI states, and at least one channel other than the PDCCH being configured for the transmission based on the one set of TCI states; a PDSCH being configured for the transmission based on the plurality of sets of TCI states, and at least one channel other than the PDSCH being configured for the transmission based on the one set of TCI states; a PUCCH being configured for the transmission based on the plurality of sets of TCI states, and at least one channel other than the PUCCH being configured for the transmission based on the one set of TCI states; a PUSCH being configured for the transmission based on the plurality of sets of TCI states, and at least one channel other than the PUSCH being configured for the transmission based on the one set of TCI states; a DL channel being configured for the transmission based on the plurality of sets of TCI states, and an UL channel being configured for the transmission based on the one set of TCI states, in which the DL channel includes at least one of the PDCCH or the PDSCH, and the UL channel includes at least one of the PUCCH or the PUSCH; the UL channel being configured for the transmission based on the plurality of sets of TCI states, and the DL channel being configured for the transmission based on the one set of TCI states, in which the DL channel includes at least one of the PDCCH or the PDSCH, and the UL channel includes at least one of the PUCCH or the PUSCH; or the DL channel and the UL channel being both configured for the transmission based on the plurality of sets of TCI states, in which the DL channel includes at least one of the PDCCH or the PDSCH, and the UL channel includes at least one of the PUCCH or the PUSCH.

In an optional design, one reception of the PDCCH includes n PDCCH candidates, the n PDCCH candidates have a one-to-one correspondence with n SS sets, and the n SS sets have a link relationship, in which the n is a positive integer greater than 1.

In an optional design, a CORESET corresponding to the PDCCH is configured with at least two TCI states, and each TCI state includes a joint TCI state or a downlink TCI state.

In an optional design, the PDSCH is configured with at least one of: a repetition pattern, a repetition number or a DMRS port of at least two CDM groups. The repetition pattern includes at least one of a frequency division multiplexing or a time division multiplexing.

In an optional design, frequency domain resources of n PDSCH occasions configured to transmit the PDSCH are different, and TCI states of the n PDSCH occasions are different, in which the n is a positive integer greater than 1; or, time domain resources of n PDSCH occasions configured to transmit the PDSCH are different, and TCI states of the n PDSCH occasions are different; or, a DMRS port configured to transmit the PDSCH corresponds to at least two CDM groups, and TCI states corresponding to the at least two CDM groups are different; or, TCI states configured to transmit the PDSCH include at least two joint TCI states or downlink TCI states.

In an optional design, the PUCCH is associated with at least one of: at least two spatial relation information, at least two TCI states, or at least two power control parameter sets. The TCI state includes an uplink TCI state or a joint TCI state.

In an optional design, frequency domain resources of n PUCCH occasions configured to transmit the PUCCH are different, and TCI states of the n PUCCH occasions are different, in which the n is a positive integer greater than 1; or, time domain resources of n PUCCH occasions configured to transmit the PUCCH are different, and TCI states of the n PUCCH occasions are different; or, a DMRS port configured to transmit the PUCCH corresponds to at least two CDM groups, and TCI states corresponding to the at least two CDM groups are different; or, TCI states configured to transmit the PUCCH include at least two joint TCI states or uplink TCI states.

In an optional design, the PUSCH is associated with at least one of: at least two SRS resource indications, at least two layer domains, a DMRS port of at least two CDM groups, at least two PUSCH precoder domains, or at least two SRS source settings.

In an optional design, frequency domain resources of n PUSCH occasions configured to transmit the PUSCH are different, and TCI states of at least two PUSCH occasions are different, in which the n is a positive integer greater than 1; or, time domain resources of n PUSCH occasions configured to transmit the PUSCH are different, and TCI states of at least two PUSCH occasions are different; or, a DMRS port configured to transmit the PUSCH corresponds to at least two CDM groups, and TCI states corresponding to the at least two CDM groups are different; or, TCI states configured to transmit the PUSCH include at least two joint TCI states or uplink TCI states.

In an optional design, the reporting module 901 is further configured to transmit the capability information corresponding to a target transmission mode combination in the transmission mode combination of different channels to the access network device.

In summary, the terminal reports the capability information and/or the transmission mode combination of different channels supported by the terminal to the access network device, facilitating the diversification of the terminal and the base station to configure an M-TRP transmission of the TCI state for the terminal in different ways.

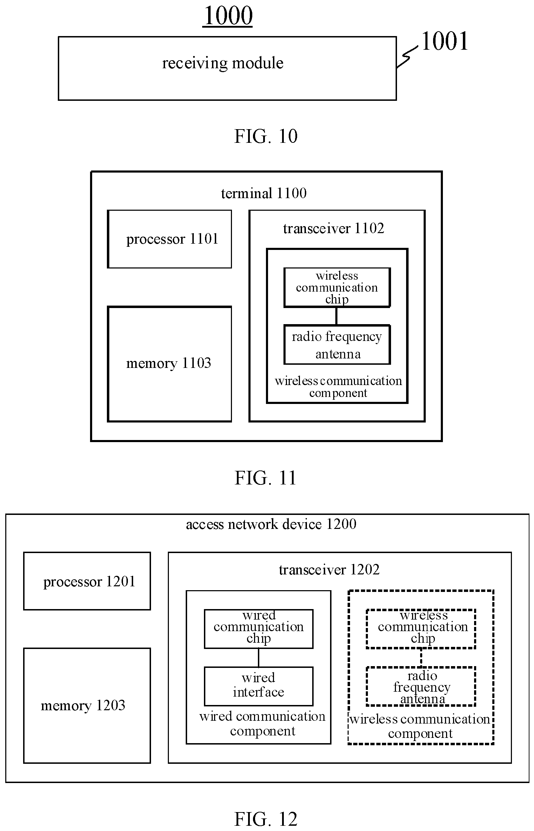

FIG. 10 is a block diagram of an apparatus for reporting a terminal capability according to an embodiment of the present disclosure. As illustrated in FIG. 10, the apparatus includes a receiving module 1001.

The receiving module 1001 is configured to receive information that a terminal supports a plurality of sets of TCI states reported by the terminal.

In an optional design, a single set of TCI states includes a joint TCI state, and the joint TCI state is configured to indicate both an uplink channel/reference signal and a downlink channel/reference signal; or, a single set of TCI states includes at least one of a downlink TCI state or an uplink TCI state.

In an optional design, the receiving module 1001 is further configured to receive capability information of supporting the plurality of sets of TCI states reported by the terminal.

In an optional design, the capability information includes at least one of: supporting a plurality of joint TCI states; supporting a plurality of downlink TCI states and/or a plurality of uplink TCI states; or supporting at least one joint TCI state, and at least one downlink TCI state and/or at least one uplink TCI state.

In an optional design, the receiving module 1001 is further configured to receive a transmission mode combination of different channels supported by the terminal, reported by the terminal, and the transmission mode combination is a transmission based on one set of TCI states or a transmission based on the plurality of sets of TCI states.

In an optional design, the transmission mode combination of different channels includes at least one of: a PDCCH being configured for the transmission based on the plurality of sets of TCI states, and at least one channel other than the PDCCH being configured for the transmission based on the one set of TCI states; a PDSCH being configured for the transmission based on the plurality of sets of TCI states, and at least one channel other than the PDSCH being configured for the transmission based on the one set of TCI states; a PUCCH being configured for the transmission based on the plurality of sets of TCI states, and at least one channel other than the PUCCH being configured for the transmission based on the one set of TCI states; a PUSCH being configured for the transmission based on the plurality of sets of TCI states, and at least one channel other than the PUSCH being configured for the transmission based on the one set of TCI states; a DL channel being configured for the transmission based on the plurality of sets of TCI states, and an UL channel being configured for the transmission based on the one set of TCI states, in which the DL channel includes at least one of the PDCCH or the PDSCH, and the UL channel includes at least one of the PUCCH or the PUSCH; the UL channel being configured for the transmission based on the plurality of sets of TCI states, and the DL channel being configured for the transmission based on the one set of TCI states, in which the DL channel includes at least one of the PDCCH or the PDSCH, and the UL channel includes at least one of the PUCCH or the PUSCH; or the DL channel and the UL channel being both configured for the transmission based on the plurality of sets of TCI states, in which the DL channel includes at least one of the PDCCH or the PDSCH, and the UL channel includes at least one of the PUCCH or the PUSCH.

In an optional design, one reception of the PDCCH includes n PDCCH candidates, the n PDCCH candidates have a one-to-one correspondence with n SS sets, and the n SS sets have a link relationship, in which the n is a positive integer greater than 1.

In an optional design, a CORESET corresponding to the PDCCH is configured with at least two TCI states, and each TCI state includes a joint TCI state or a downlink TCI state.

In an optional design, the PDSCH is configured with at least one of: a repetition pattern, a repetition number or a DMRS port of at least two CDM groups. The repetition pattern includes at least one of a frequency division multiplexing or a time division multiplexing.

In an optional design, frequency domain resources of n PDSCH occasions configured to transmit the PDSCH are different, and TCI states of the n PDSCH occasions are different, in which the n is a positive integer greater than 1; or, time domain resources of n PDSCH occasions configured to transmit the PDSCH are different, and TCI states of the n PDSCH occasions are different; or a DMRS port configured to transmit the PDSCH corresponds to at least two CDM groups, and TCI states corresponding to the at least two CDM groups are different; or, TCI states configured to transmit the PDSCH include at least two joint TCI states or downlink TCI states.

In an optional design, the PUCCH is associated with at least one of: at least two spatial relation information, at least two TCI states, or at least two power control parameter sets. The TCI state includes an uplink TCI state or a joint TCI state.

In an optional design, frequency domain resources of n PUCCH occasions configured to transmit the PUCCH are different, and TCI states of the n PUCCH occasions are different, in which the n is a positive integer greater than 1; or, time domain resources of n PUCCH occasions configured to transmit the PUCCH are different, and TCI states of the n PUCCH occasions are different; or, a DMRS port configured to transmit the PUCCH corresponds to at least two CDM groups, and TCI states corresponding to the at least two CDM groups are different; or, TCI states configured to transmit the PUCCH include at least two joint TCI states or uplink TCI states.

In an optional design, the PUSCH is associated with at least one of: at least two SRS resource indications, at least two layer domains, a DMRS port of at least two CDM groups, at least two PUSCH precoder domains, or at least two SRS source settings.

In an optional design, frequency domain resources of n PUSCH occasions configured to transmit the PUSCH are different, and TCI states of at least two PUSCH occasions are different, in which the n is a positive integer greater than 1; or, time domain resources of n PUSCH occasions configured to transmit the PUSCH are different, and TCI states of at least two PUSCH occasions are different; or, a DMRS port configured to transmit the PUSCH corresponds to at least two CDM groups, and TCI states corresponding to the at least two CDM groups are different; or, TCI states configured to transmit the PUSCH include at least two joint TCI states or uplink TCI states.

In an optional design, the receiving module 1001 is further configured to receive the capability information sent by the terminal, and the capability information is generated by the terminal according to a target transmission mode combination in the transmission mode combination of different channels.

In summary, the terminal reports the capability information and/or the transmission mode combination of different channels supported by the terminal to the access network device, facilitating the diversification of the terminal and the base station to configure an M-TRP transmission of the TCI state for the terminal in different ways.

FIG. 11 illustrates a schematic diagram of a terminal 1100 according to an embodiment of the present disclosure. The terminal may include a processor 1101, a transceiver 1102, and a memory 1103.

The processor 1101 includes one or more processing cores. The processor 1101 executes various functional applications and information processing by running software programs and modules.

The transceiver 1102 may include a receiver and a transmitter. For example, the receiver and the transmitter may be realized as the same wireless communication component, and the wireless communication component may include a wireless communication chip and a radio frequency antenna.

The memory 1103 can be connected to the processor 1101 and the transceiver 1102.

The memory 1103 is configured to store a computer program executed by the processor, and the processor 1101 is configured to execute the computer program to implement various steps executed by the terminal in the wireless communication system in the above method embodiments.

In addition, the memory 1103 may be implemented by any type of volatile or nonvolatile storage device, or a combination thereof, including, but not limited to: a disk or an optical disc, an electrically-erasable programmable read-only memory, an erasable programmable read-only memory, a static random-access memory, a read-only memory, a magnetic memory, a flash memory, a programmable read-only memory.

In an illustrative solution, the transceiver 1102 is configured to transmit a first service access request to a relay terminal in a relay sidelink scenario. The first service access request is configured to trigger the relay terminal to transmit a packet data unit (PDU) session modification request to a network side device, and the PDU session modification request is configured to request a non-relay terminal to access a first broadcast/multicast service.

Or, the transceiver 1102 is configured to transmit a second service access request to the network side device, and the second service access request is configured to request the non-relay terminal to access the first broadcast/multicast service.

The process performed by the transceiver 1102 can refer to various steps performed by the terminal in the above methods.

The transceiver is further configured to send the PDU session modification request to an access side device according to the first service access request, and the PDU session modification request is configured to request the terminal to access the first broadcast/multicast service.

The process performed by the transceiver 1102 can refer to various steps performed by the terminal in the above methods.

FIG. 12 illustrates a schematic diagram of a network device 1200 according to an embodiment of the present disclosure. The network device 1200 may include a processor 1201, a transceiver 1202, and a memory 1203.

The processor 1201 includes one or more processing cores. The processor 1201 executes various functional applications and information processing by running software programs and modules.

The transceiver 1202 may include a receiver and a transmitter. For example, the transceiver 1202 may include a wired communication component, and the wired communication component may include a wired communication chip and a wired interface (such as a fiber interface). Optionally, the transceiver 1202 may also include a wireless communication component, and the wireless communication component may include a wireless communication chip and a radio frequency antenna.

The memory 1203 can be connected to the processor 1201 and the transceiver 1202.

The memory 1203 is configured to store a computer program executed by the processor, and the processor 1201 is configured to execute the computer program to implement various steps executed by a non-relay terminal or a relay terminal in the wireless communication system in the above method embodiments.

In addition, the memory 1203 may be implemented by any type of volatile or nonvolatile storage device, or a combination thereof, including, but not limited to: a disk or an optical disc, an electrically-erasable programmable read-only memory, an erasable programmable read-only memory, a static random-access memory, a read-only memory, a magnetic memory, a flash memory, a programmable read-only memory.

In an illustrative solution, the transceiver 1202 is configured to receive a second service access request sent by a non-relay terminal in a relay sidelink scenario. The second service access request is configured to request the non-relay terminal to access a first broadcast/multicast service.

The processes performed by the transceiver 1202 and the processor 1201 in the above network device 1200 can refer to various steps performed by a user plane function (UPF) unit in the access network device in the above methods.

The processor 1201 is configured to access the terminal to the first broadcast/multicast service after verifying that the terminal has an authority to access the first broadcast/multicast service according to a service access triggered request.

The processes performed by the transceiver 1202 and the processor 1201 in the above network device 1200 can refer to various steps performed by a session management function (SMF) unit in the access network device in the above methods.

The embodiments of the present disclosure also provide a computer-readable storage medium for storing a computer program, and the computer program is loaded and executed by a processor to implement the steps executed by the terminal or the access network device in the above methods.

The embodiments of the present disclosure also provide a computer program product including computer instructions, and the computer instructions are stored in a computer-readable storage medium. The computer instructions are read by a processor of a computer equipment from the computer-readable storage medium and executed by the processor, so that the computer equipment performs the steps executed by the terminal or the access network device in the above methods.

The embodiments of the present disclosure also provide a chip for operating in a computer equipment, so that the computer equipment performs the steps executed by the terminal or the access network device in the above methods.

The embodiments of the present disclosure also provide a computer program executed by a processor of a computer equipment, so that the computer equipment performs the steps executed by the terminal or the access network device in the above methods.

It should be understood by those skilled in the art that, in the above one or more embodiments, the functions described in the embodiments of the present disclosure may be realized by the hardware, software, firmware or any combination thereof. When they are realized by the hardware, these functions can be stored in the computer-readable medium or transmitted as one or more instructions or codes on the computer-readable medium. The computer-readable medium includes a computer storage medium and a communication medium, the communication medium includes any medium facilitating the transmission of the computer program from one place to another. The storage medium may be an available medium accessible to a general-purpose or special-purpose computer.

It should be understood that above embodiments of the present disclosure are just explanatory, and cannot be construed to limit the present disclosure. Any modification, equivalent replacement, improvement, etc. made within the spirit and principle of the present disclosure shall be included in the scope of protection of the present disclosure.

## Claims

1. A method for reporting a terminal capability, executed by a terminal, and comprising:
reporting that the terminal supports a plurality of sets of transmission configuration indication (TCI) states to an access network device.

2. The method according to claim 1, wherein
a single set of TCI states comprises a joint TCI state, and the joint TCI state is applicable to both an uplink channel/reference signal and a downlink channel/reference signal; or
a single set of TCI states comprises at least one of a downlink TCI state or an uplink TCI state.

3. The method according to claim 1, wherein reporting that the terminal supports the plurality of sets of transmission configuration indication (TCI) states to the access network device comprises:
reporting capability information of supporting the plurality of sets of TCI states to the access network device.

4. The method according to claim 3, wherein the capability information comprises at least one of:
supporting a plurality of joint TCI states;
supporting a plurality of downlink TCI states and/or a plurality of uplink TCI states; or
supporting at least one joint TCI state, and at least one downlink TCI state and/or at least one uplink TCI state.

5. The method according to claim 1, wherein reporting that the terminal supports the plurality of sets of transmission configuration indication (TCI) states to the access network device comprises:
reporting a transmission mode combination of different channels supported by the terminal to the access network device, wherein the transmission mode combination is a transmission based on one set of TCI states or a transmission based on the plurality of sets of TCI states.

6. The method according to claim 5, wherein the transmission mode combination of different channels comprises at least one of:
a physical downlink control channel (PDCCH) being configured for the transmission based on the plurality of sets of TCI states, and at least one channel other than the PDCCH being configured for the transmission based on the one set of TCI states;
a physical downlink shared channel (PDSCH) being configured for the transmission based on the plurality of sets of TCI states, and at least one channel other than the PDSCH being configured for the transmission based on the one set of TCI states;
a physical uplink control channel (PUCCH) being configured for the transmission based on the plurality of sets of TCI states, and at least one channel other than the PUCCH being configured for the transmission based on the one set of TCI states;
a physical uplink shared channel (PUSCH) being configured for the transmission based on the plurality of sets of TCI states, and at least one channel other than the PUSCH being configured for the transmission based on the one set of TCI states;
a downlink (DL) channel being configured for the transmission based on the plurality of sets of TCI states, and an uplink (UL) channel being configured for the transmission based on the one set of TCI states, wherein the DL channel comprises at least one of the PDCCH or the PDSCH, and the UL channel comprises at least one of the PUCCH or the PUSCH;
the UL channel being configured for the transmission based on the plurality of sets of TCI states, and the DL channel being configured for the transmission based on the one set of TCI states, wherein the DL channel comprises at least one of the PDCCH or the PDSCH, and the UL channel comprises at least one of the PUCCH or the PUSCH; or
the DL channel and the UL channel being both configured for the transmission based on the plurality of sets of TCI states, wherein the DL channel comprises at least one of the PDCCH or the PDSCH, and the UL channel comprises at least one of the PUCCH or the PUSCH.

7. The method according to claim 6, wherein the PDCCH being configured for the transmission based on the plurality of sets of TCI states comprises:
one reception using the PDCCH comprising n PDCCH candidates, the n PDCCH candidates having a one-to-one correspondence with n search space (SS) sets, and the n SS sets having a link relationship, wherein the n is a positive integer greater than 1.

8. The method according to claim 6, wherein the PDCCH being configured for the transmission based on the plurality of sets of TCI states comprises:
a control resource set (CORESET) corresponding to the PDCCH being configured with at least two TCI states, and each TCI state comprises a joint TCI state or a downlink TCI state.

9. The method according to claim 6, wherein the PDSCH being configured for the transmission based on the plurality of sets of TCI states comprises:
the PDSCH being configured with at least one of: a repetition pattern, a repetition number or a demodulation reference signal (DMRS) port of at least two code division multiplexing (CDM) groups, wherein the repetition pattern comprises at least one of a frequency division multiplexing or a time division multiplexing.

10. The method according to claim 9, wherein
frequency domain resources of n PDSCH occasions configured to transmit the PDSCH are different, and TCI states of the n PDSCH occasions are different, wherein the n is a positive integer greater than 1; or
time domain resources of n PDSCH occasions configured to transmit the PDSCH are different, and TCI states of the n PDSCH occasions are different; or
a DMRS port configured to transmit the PDSCH corresponds to at least two CDM groups, and TCI states corresponding to the at least two CDM groups are different; or
TCI states configured to transmit the PDSCH comprise at least two TCI states, and each TCI state comprises a joint TCI state or a downlink TCI state.

11. The method according to claim 6, wherein the PUCCH being configured for the transmission based on the plurality of sets of TCI states comprises:
the PUCCH being associated with at least one of: at least two spatial relation information, at least two TCI states, or at least two power control parameter sets, wherein the TCI state comprises an uplink TCI state or a joint TCI state.

12. The method according to claim 11, wherein
frequency domain resources of n PUCCH occasions configured to transmit the PUCCH are different, and TCI states of the n PUCCH occasions are different, wherein the n is a positive integer greater than 1; or
time domain resources of n PUCCH occasions configured to transmit the PUCCH are different, and TCI states of the n PUCCH occasions are different; or
a demodulation reference signal (DMRS) port configured to transmit the PUCCH corresponds to at least two code division multiplexing (CDM) groups, and TCI states corresponding to the at least two CDM groups are different; or
TCI states configured to transmit the PUCCH comprise at least two TCI states, and each TCI state comprises a joint TCI state or an uplink TCI state.

13. The method according to claim 6, wherein the PUSCH being configured for the transmission based on the plurality of sets of TCI states comprises:
the PUSCH being associated with at least one of: at least two sounding reference signal (SRS) resource indications, at least two layer domains, a demodulation reference signal (DMRS) port of at least two code division multiplexing (CDM) groups, at least two PUSCH precoder domains, or at least two SRS source settings.

14. The method according to claim 13, wherein
frequency domain resources of n PUSCH occasions configured to transmit the PUSCH are different, and TCI states of at least two PUSCH occasions are different, wherein the n is a positive integer greater than 1; or
time domain resources of n PUSCH occasions configured to transmit the PUSCH are different, and TCI states of at least two PUSCH occasions are different; or
a DMRS port configured to transmit the PUSCH corresponds to at least two CDM groups, and TCI states corresponding to the at least two CDM groups are different; or
TCI states configured to transmit the PUSCH comprise at least two TCI states, and each TCI state comprises a joint TCI state or an uplink TCI state.

15. The method according to claim 6, further comprising:
sending capability information corresponding to a target transmission mode combination in the transmission mode combination of different channels to the access network device.

16. A method for reporting a terminal capability, executed by an access network device, and comprising:
receiving information that a terminal supports a plurality of sets of transmission configuration indication (TCI) states reported by the terminal.

17. The method according to claim 16, wherein
a single set of TCI states comprises a joint TCI state, and the joint TCI state is applicable to both an uplink channel/reference signal and a downlink channel/reference signal; or
a single set of TCI states comprises at least one of a downlink TCI state or an uplink TCI state.

18. The method according to claim 16, wherein receiving information that the terminal supports the plurality of sets of transmission configuration indication (TCI) states reported by the terminal comprises:
receiving capability information of supporting the plurality of sets of TCI states reported by the terminal.

19. The method according to claim 18, wherein the capability information comprises at least one of:
supporting a plurality of joint TCI states, wherein the joint TCI states are applicable to both an uplink channel/reference signal and a downlink channel/reference signal;
supporting a plurality of downlink TCI states and/or a plurality of uplink TCI states; or
supporting at least one joint TCI state, and at least one downlink TCI state and/or at least one uplink TCI state.

20. The method according to claim 19, wherein receiving information that the terminal supports the plurality of sets of transmission configuration indication (TCI) states reported by the terminal comprises:
receiving a transmission mode combination of different channels supported by the terminal, reported by the terminal, wherein the transmission mode combination is a transmission based on one set of TCI states or a transmission based on the plurality of sets of TCI states.

21. The method according to claim 20, wherein the transmission mode combination of different channels comprises at least one of:
a physical downlink control channel (PDCCH) being configured for the transmission based on the plurality of sets of TCI states, and at least one channel other than the PDCCH being configured for the transmission based on the one set of TCI states;
a physical downlink shared channel (PDSCH) being configured for the transmission based on the plurality of sets of TCI states, and at least one channel other than the PDSCH being configured for the transmission based on the one set of TCI states;
a physical uplink control channel (PUCCH) being configured for the transmission based on the plurality of sets of TCI states, and at least one channel other than the PUCCH being configured for the transmission based on the one set of TCI states;
a physical uplink shared channel (PUSCH) being configured for the transmission based on the plurality of sets of TCI states, and at least one channel other than the PUSCH being configured for the transmission based on the one set of TCI states;
a downlink (DL) channel being configured for the transmission based on the plurality of sets of TCI states, and an uplink (UL) channel being configured for the transmission based on the one set of TCI states, wherein the DL channel comprises at least one of the PDCCH or the PDSCH, and the UL channel comprises at least one of the PUCCH or the PUSCH;
the UL channel being configured for the transmission based on the plurality of sets of TCI states, and the DL channel being configured for the transmission based on the one set of TCI states, wherein the DL channel comprises at least one of the PDCCH or the PDSCH, and the UL channel comprises at least one of the PUCCH or the PUSCH; or
the DL channel and the UL channel being both configured for the transmission based on the plurality of sets of TCI states, wherein the DL channel comprises at least one of the PDCCH or the PDSCH, and the UL channel comprises at least one of the PUCCH or the PUSCH.

22. The method according to claim 21, wherein the PDCCH being configured for the transmission based on the plurality of sets of TCI states comprises:
one reception using the PDCCH comprising n PDCCH candidates, the n PDCCH candidates having a one-to-one correspondence with n search space (SS) sets, and the n SS sets having a link relationship, wherein the n is a positive integer greater than 1.

23. The method according to claim 21, wherein the PDCCH being configured for the transmission based on the plurality of sets of TCI states comprises:
a control resource set (CORESET) corresponding to the PDCCH being configured with at least two TCI states, and each TCI state comprises a joint TCI state or a downlink TCI state.

24. The method according to claim 21, wherein the PDSCH being configured for the transmission based on the plurality of sets of TCI states comprises:
the PDSCH being configured with at least one of: a repetition pattern, a repetition number or a demodulation reference signal (DMRS) port of at least two code division multiplexing (CDM) groups, wherein the repetition pattern comprises at least one of a frequency division multiplexing or a time division multiplexing.

25. The method according to claim 24, wherein
frequency domain resources of n PDSCH occasions configured to transmit the PDSCH are different, and TCI states of the n PDSCH occasions are different, wherein the n is a positive integer greater than 1; or
time domain resources of n PDSCH occasions configured to transmit the PDSCH are different, and TCI states of the n PDSCH occasions are different; or
a DMRS port configured to transmit the PDSCH corresponds to at least two CDM groups, and TCI states corresponding to the at least two CDM groups are different; or
TCI states configured to transmit the PDSCH comprise at least two joint TCI states or downlink TCI states.

26. The method according to claim 21, wherein the PUCCH being configured for the transmission based on the plurality of sets of TCI states comprises:
the PUCCH being associated with at least one of: at least two spatial relation information, at least two TCI states, or at least two power control parameter sets, wherein the TCI state comprises an uplink TCI state or a joint TCI state.

27. The method according to claim 26, wherein
frequency domain resources of n PUCCH occasions configured to transmit the PUCCH are different, and TCI states of the n PUCCH occasions are different, wherein the n is a positive integer greater than 1; or
time domain resources of n PUCCH occasions configured to transmit the PUCCH are different, and TCI states of the n PUCCH occasions are different; or
a demodulation reference signal (DMRS) port configured to transmit the PUCCH corresponds to at least two code division multiplexing (CDM) groups, and TCI states corresponding to the at least two CDM groups are different; or
TCI states configured to transmit the PUCCH comprise at least two joint TCI states or uplink TCI states.

28. The method according to claim 21, wherein
the PUSCH being associated with at least one of: at least two sounding reference signal (SRS) resource indications, at least two layer domains, a demodulation reference signal (DMRS) port of at least two code division multiplexing (CDM) groups, at least two PUSCH precoder domains, or at least two SRS source settings.

29. The method according to claim 28, wherein
frequency domain resources of n PUSCH occasions configured to transmit the PUSCH are different, and TCI states of at least two PUSCH occasions are different, wherein the n is a positive integer greater than 1; or
time domain resources of n PUSCH occasions configured to transmit the PUSCH are different, and TCI states of at least two PUSCH occasions are different; or
a DMRS port configured to transmit the PUSCH corresponds to at least two CDM groups, and TCI states corresponding to the at least two CDM groups are different; or
TCI states configured to transmit the PUSCH comprise at least two joint TCI states or uplink TCI states.

30. The method according to claim 21, further comprising:
receiving the capability information sent by the terminal, wherein the capability information is generated by the terminal according to a target transmission mode combination in the transmission mode combination of different channels.

31. An apparatus for reporting a terminal capability, comprising:
a reporting module configured to report that a terminal supports a plurality of sets of transmission configuration indication (TCI) states to an access network device.

32. An apparatus for reporting a terminal capability, comprising:
a receiving module configured to receive information that a terminal supports a plurality of sets of transmission configuration indication (TCI) states reported by the terminal.

33. A terminal, comprising:
a processor; and
a transceiver connected to the processor,
wherein the processor is configured to load and execute executable instructions to implement a method for reporting a terminal capability according to any one of claims 1 to 15.

34. A computer-readable storage medium, storing at least one instruction, at least one program, a code set or an instruction set, wherein the at least one instruction, the at least one program, the code set or the instruction set is loaded and executed by the processor to implement a method for reporting a terminal capability according to any one of claims 1 to 15, or, to implement a method for reporting a terminal capability according to any one of claims 16 to 30.
